# EUROPÄISCHE PATENTSCHRIFT

(11) **EP 3 572 035 B1**
(45) Veröffentlichungstag und Bekanntmachung des Hinweises auf die Patenterteilung: **07.04.2021**
(21) Anmeldenummer: 18174001.0
(22) Anmeldetag: 24.05.2018
(51) Int. Cl.: A61C 13/10, A61C 13/093

(54) **DENTALPROTHESE, ZUGEHÖRIGES HALBPRODUKT SOWIE BAUSATZ**
DENTAL PROSTHESIS, ASSOCIATED SEMI-FINISHED PRODUCT AND KIT
PROTHÈSE DENTAIRE, PRODUIT SEMI-FINI ASSOCIÉ AINSI QUE JEU DE PIÈCES

(43) Veröffentlichungstag der Anmeldung: 27.11.2019
(73) Patentinhaber: Ivoclar Vivadent AG, 9494 Schaan (LI)
(72) Erfinder: Häfele, Clemens, Andreas, 6800 Feldkirch (AT); Krybus, Robert, Wolfgang, 9479 Malans (CH); Hagenbuch, Konrad, 9469 Haag (CH)
(74) Vertreter: Baronetzky, Klaus

(56) Entgegenhaltungen:
- DE-A1-102014 108 632
- DE-A1-102016 114 825
- US-A1- 2013 171 588
- US-A1- 2015 327 962
- US-A1- 2017 189 145

## Beschreibung

Die Erfindung betrifft eine Dentalprothese, gemäß dem Oberbegriff von Anspruch 1, sowie ein Halbprodukt, gemäß Anspruch 1 4, sowie einen Bausatz gemäß Anspruch 1 5.

Es ist seit langem bekannt, Prothesen, zu denen auch Teilprothesen gehören, mit den zugehörigen Zähnen, die einen Zahnsatz bilden, also entweder einen Voll-Zahnsatz oder einen Teil-Zahnsatz, zu verkleber, siehe z.B Dokument US2015/0327962.

Typischerweise wird hierzu in die nutenförmige Zahnausnehmung Klebstoff eingebracht, und der Zahnsatz wird in die Zahnaausnehmung eingedrückt. Hierbei quillt ein Teil des Klebstoffs am Zahnfleischsaum heraus.

Dieser muss in einem weiteren Verfahrensschritt entfernt werden, beispielsweise abgeschliffen bzw. gefräst werden.

Es ist auch vorgeschlagen worden, mit weniger Klebstoff zu arbeiten, so dass möglichst kein Klebstoffwulst entsteht.

Bei dieser Lösung besteht jedoch die Gefahr, dass der Klebstoffspalt nicht vollständig gefüllt ist. Es verbleiben Innenecken, die gerade intraoral eine Bakterien-Falle bilden und daher dringend zu vermeiden sind.

Um die Verklebung zu verbessern, ist es auch bekannt geworden, den Klebstoff zusätzlich oder ausschließlich auf die gingivale Seite des Zahnsatzes aufzubringen. Auch bei dieser Lösung hängt jedoch die Qualität der Klebung, insbesondere auch die über den Verlauf des Zahnbogens gleichmäßige Schichtdicke, vom Geschick des Zahntechniker ab.

Ferner sind Hilfsmittel vorgeschlagen worden, um die Ausrichtung des Zahnsatzes in der Prothesenbasis zu verbessern. Bewährt haben sich insofern sogenannte Transfer-Schablonen, die eine eindeutige Zuordnungen der jeweiligen Zähne zu ihren Zahn-Ausnehmungen und insbesondere auch eine Fein-Justierung der Position ermöglichen.

Diese Lösungen hat zwar durchaus Vorteile, erlauben es aber nicht, einen gleichmäßigen klebespalt über den Verlauf des Zahnbogens sicherzustellen. Insbesondere, wenn der Klebstoffauftrag an einer Stelle oder einem Bereich über den Verlauf des Zahnbogens zu gering ist, neigt der Zahntechniker dazu, den Zahnsatz dort durch Druck zwischen Daumen und Zeigefinger in die Zahnausnehmungen zu drücken.

Dies führt jedoch dazu, dass der dort befindliche Klebstoff verdrängt wird, so dass entgegen der Absicht des Zahntechnikers an der betreffenden Stelle gar kein Klebstoff mehr zur Verfügung steht der für die Verklebung in Betracht käme, bzw. aufgrund des Zurückfederns der Elemente zueinander zu wenig Kleber für den Verbund zur Verfügung steht, da er an dieser Stelle duch die Federkraft verdrängt wird.

Ferner ist es seit langem bekannt geworden, für die Modellierung verwendete Werkstoffe einzuspritzen.

Diese bekannten Maßnahmen vermögen jedoch das vorstehend genannte Problem nicht zu lösen.

Daher liegt der Erfindung die Aufgabe zugrunde, eine Dentalprothese gemäß Anspruch 1, ein Halbprodukt gemäß Anspruch 1 4 5- sowie einen Bausatz gemäß Anspruch 1 5 zu schaffen, die eine verbesserte und von Bedienungsfehlern unbehelligte Bereitstellung einer Dentalprothese bzw des zugehörigen Halbprodukts ermöglicht.

Diese Aufgabe wird erfindungsgemäß durch Anspruch 1, 14 bzw. 15 gelöst. Vorteilhafte Weiterbildungen ergeben sich aus den Unteransprüchen.

Es ist besonders günstig, dass ein gezielt und kontrolliert geformter Klebstoffkanal für eine definierte Stärke der Klebstoffschicht über den gesamten Klebebereich der Prothese sorgen kann. Die Stärke der Klebstoffschicht lässt sich durch Formgestaltung der einander zugewandten Flächen, aber auch durch strömungstechnische Maßnahmen steuern und ist so ausgelegt, dass überall eine minimale Schichtstärke nicht unterschritten wird. Dieses Minimalmaß läßt sich wiederum festlegen, z.B. in Abhängigkeit vom verwendeten Klebstoff, z.B. auf 0,06 mm.

Es ist besonders günstig, dass sich in der Klebstoffkanal in der Haupterstreckungsrichtung des Zahnbogens erstreckt, und zwar im Übergangsbereich zwischen dem Zahnbogen und der Prothesenbasis. Der Klebstoffkanal kann so, z.B. ausgehend von der distalen Seite eines Zahnbogens, den Klebstoff über eine weite Strecke und auch großflächig zuverlässig verteilen. Hierzu wird in Abhängigkeit von den Fließeigenschaften des Klebstoffs der Klebstoffkanal rheologisch berechnet und, und insbesondere auch der Strömungswiderstand an jeder Stelle berücksichtigt.

Ziel der Berechnung ist die gleichmäßige und vollständige Befüllung aller Teile des Klebstoffkanals und der Klebstoffflächen, also den Flächen, auf denen sich die Klebstoffschicht erstreckt.

Bevorzugt ist der Klebstoffkanal ausgehend von einer Klebstoff-Befüllöffnung mit einer Art Baumstruktur aufgebaut, also mit einem Hauptkanal, von dem sich seitlich, also zum Gingivalsaum hin, Seitenkanäle wegerstrecken.

Es ist besonders günstig, wenn nicht nur der Klebstoffkanal, sondern auch die Klebstoffflächen, die sich seitlich neben dem Klebststoffkanal und zwischen den erfindungsgemäßen Kanal-Seitenästen erstrecken, mit vorgegebenen Dimensionierungen ausgebildet werden.

Beispielsweise kann auf der Klebstoffläche für die Klebstoffschicht ein Spalt so ausgebildet werden, dass zum Rand hin, also zum Gingivasaum hin, eine Verjüngung besteht. Diese führt dazu, dass ein Strömungswiderstand bereitgestellt wird, der der Vergleichmäßigung der Füllung mit Klebstoff dient.

Zudem erhöht sich an der Stelle der Verjüngung die Strömungsgeschwindigkeit des Klebstoffs, so dass die Gefahr einer Klebstofflücke minimiert wird.

Bevorzugt ist es vorgesehen, dass der Klebstoffkanal eine Kanalachse aufweist, die in ihrer Höhenlage in der Verlängerung einer Klebstofffläche liegt, die sich seitlich des Klebstoffkanals erstreckt. Diese Lösung bietet den geringsten Strömungswiderstand.

Der Klebstoffkanal lässt sich über einen druckfesten Anschluss an ein Befüllelement sicher und mit kontrolliertem Druck befüllen. Ein Beispiel hierfür ist eine LuerLock-Verbindung zwischen einer Spritze und einem hierzu passenden Spritzenadapter, der in die Prothesenbasis und/oder den Zahnsatz eingebracht ist.

Dann ist es bevorzugt, dass der Spritzenadapter innen im wesentlichen bündig in den Klebstoffkanal übergeht und eine konische Innenform aufweist, die an eine handelsübliche Spritzentülle, den Spritzenkonus, angepasst ist.

Der Spritzenadapter kann auch aus zwei Halbschalen geformt sein, die eine horizontale Trennebene aufweisen. Dies kann für die Anbringung am Übergang zwischen Zahnsatz und Basis günstig sein.

Alternativ lässt sich auch anstelle der Spritze eine Klebstoffpumpe einsetzen, die mit einem vorgegebenen Druckprofil den Klebstoff in den Klebstoffkanal einbringt.

Der Zahnsatz ist typischerweise bogenförmig ausgebildet und bildet insofern eine Zahnbogen.

Die Erfindung ist nicht auf eine Vollprothese mit einem Voll-Zahnsatz beschränkt. Vielmehr kann sie auch bei einer Teiprothese mit einem Teil-Zahnsatz eingesetzt werden.

Erfindungsgemäß ist es bevorzugt, wenn der Zahnsatz beispielsweise über einen Einspannhalter in Position in der Zahnausnehmung der Prothesenbasis gehalten wird. Dies lässt sich beispielsweise durch einen Einspannhalter gemäß der EU-DM/089 612 realisieren. Ein solcher ist als Polyfixator bekannt geworden. Bei dieser Lösung wird die Prothese und der Zahnsatz aufeinandergedrückt, und zwar mit einer definierten Klemmkraft.

Ferner ist aus der EP 1 897 513 B1 ein Einspritzsystem bekannt, bei dem der dortige Entlüftungskanal an einem Filterelement endet. Dieses verschließt sich mit Einspritzmasse, sobald der Entlüftungskanal vollständig gefüllt ist. Auch eine derartige Lösung lässt sich erfindungsgemäß in vorteilhafter Weiterbildung analog einsetzen.

Bevorzugt wird mindestens die erfindungsgemäße Prothesenbasis mit Computerhilfe, also beispielsweise über CAD/CAM erzeugt. Bei einer derartigen Lösung ist es ohne zusätzlichen Arbeitsschritt möglich, auch den Klebstofflanal in optimierter Form zu realisieren, bespielsweise durch Fräsen.

In vorteilhafter Ausgestaltung ist es vorgesehen, dass der Klebstoffkanal eine Höhe in gingivaler/okklusaler Richtung zwischen 0,3 mm und 5 mm, insbesondere zwischen 0,5 mm und 1,5 mm aufweist und/oder der Strömungsquerschnitt des Klebstoffkanals von der Befüllöffnung ausgehend mindestens streckenweise abnimmt.

In weiterer vorteilhafter Ausgestaltung ist es vorgesehen, dass eine sich seitlich des Klebstoffkanals erstreckende Klebstofffläche einer Stärke zwischen 50 und 1000 µm und insbesondere zwischen 150 und 350 µm aufweist.

Aufgrund der genau berechneten Dimensionierung der ist Klebstoffkanals und damit der Klebstofffläche in ihrer dreidimensionalen Gestaltung läßt sich der Klebstoffwulst deutlich reduzieren, ohne dass die Gefahr besteht, das eine Klebstofflücke entsteht.

Die Erfindung bezieht sich auch ein auf ein Halbprodukt als Vorprodukt für die Herstellung einer erfindungsgemäßen Dentalprothese. Ein solches kann günstig und standardmäßig hergestellt werden und dann im letzten Schritt an die Erfordernisse angepasst werden.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Draufsicht auf einen Teil einer erfindungsgemäßen Dentalprothese unter Darstellung des Klebstoffkanals in einer erfindungsgemäßen Ausführungsform;
- Fig. 2: einen Querschnitt durch eine schematisch dargestellte erfindungsgemäße Dentalprothese in der Ausführungsform gemäß Fig. 1; und
- Fig. 3: einen schematischen Längsschnitt der Ausführungsform gemäß den Fig. 1 und 2.
- Fig. 4: einen schematischen Längsschnitt einer weiteren Ausführungsform der Erfindung;
- Fig. 5: einen Querschnitt durch eine schematisch dargestellte weitere erfindungsgemäße Ausführungsform;
- Fig. 6: einen Querschnitt durch eine schematisch dargestellte weitere erfindungsgemäße Ausführungsform;
- Fig. 7: einen Querschnitt durch eine schematisch dargestellte weitere erfindungsgemäße Ausführungsform;
- Fig. 8: einen Querschnitt durch eine schematisch dargestellte weitere erfindungsgemäße Ausführungsform;
- Fig. 9: einen Querschnitt durch eine schematisch dargestellte weitere erfindungsgemäße Ausführungsform; und
- Fig. 10: einen Querschnitt durch eine schematisch dargestellte weitere erfindungsgemäße Ausführungsform.

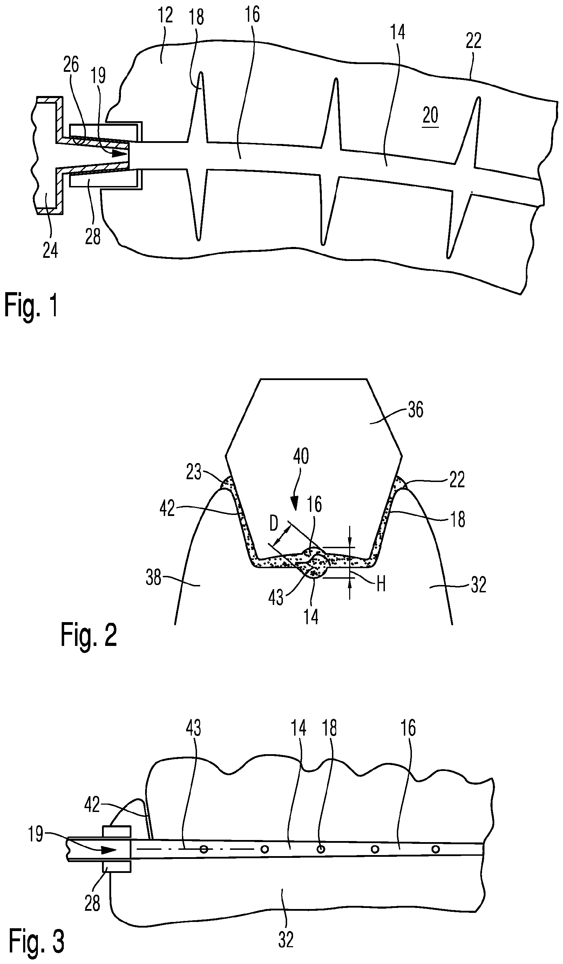

In Fig. 1 ist eine erfindungsgemäße Dentalprothese schematisch dargestellt. Die Darstellung bezieht sich auf die Kontaktfläche zwischen der Prothesenbasis (38) und dem Zahnbogen (36). Der Zahnbogen endet an dem proximale Ende 12 und ist lediglich in einem Teilbereich dargestellt; tatsächlich erstreckt er sich als Teil-Zahnbogen gekrümmt und als Voll-Zahnbogen im wesentlichen U-förmig.

Auch wenn die Darstellung gemäß Fig. 1 flächig realisiert ist, versteht es sich, dass an sich eine Abwicklung dargestellt ist, mit einem im Wesentlichen U-förmigen Verlauf, wie es auch aus Fig. 2 ersichtlich ist.

Erfindungsgemäß ist im Übergangsbereich zwischen dem Zahnsatz und der Basis ein Klebstoffkanal 14 ausgebildet. Der Klebstoffkanal weist einen Hauptkanal 16 auf, von dem Seitenkanäle 18 abzweigen.

Der Klebstoffkanal 14 beginnt an einer Klebstoff-Befüllöffnung 19, über die Klebstoff unter Druck zuführbar ist. Im Beispielsfall ist diese am distalen Ende 12 vorgesehen. Ein Versatz der Anordnung von dieser Stelle an eine beliebige andere ist möglich.

Seitlich neben dem Hauptkanal 16 und zwischen den Seitenkanälen 18 erstreckt sich eine Klebstofffläche 20, die Spalt für Klebstoff ausgebildet ist und von dem Hauptkanal 16 und den Seitenkanälen 18 mit Klebstoff gefüllt wird.

Die Füllung erfolgt bis zu einem Gingivalsaum 22, und zwar in einer solchen Weise, dass der Klebstoffspalt gemäß der Klebstofffläche 20 vollständig mit Klebstoff benetzt ist. Typischerweise tritt dann etwas Klebstoff aus dem Gingivasaum 22 aus.

Der Klebstoff wird über ein Befüllelement 24 in den Klebstoffkanal 14 eingebracht. Die Befüllöffnung 19 ist an die Form des Befüllelements 24 angepasst, so dass dort ein druckfester Anschluß realisiert ist.

In dem dargestellten Ausführungsbeispiel ist das Befüllelement 24 als Spritze ausgebildet. Die Spritze weist einen Spritzenkonus 26 auf, der in einen Spritzenadapter 28 hineinragt und dort abgedichtet ist.

Der Spritzenadapter 28 ist in dem dargestellten Ausführungsbeispiel in das Prothesenbasis-Material 32 eingeformt.

Das Befüllen des Klebstoffkanals erfolgt nun so, dass zunächst das Befüllelement 24 in den Spritzenadapter 28 eingeführt wird. Durch Betätigen der Spritze wird der in dieser befindliche Klebstoff ausgedrückt und gelangt über die Befüllöffnung 19 im Bereich des Endes 12 in den Klebstoffkanal 14. Von dort strömt der Klebstoff weiter - in der Darstellung gemäß Fig. 1 nach rechts - und verteilt sich auch Zug um Zug in die Seitenkanäle 18 des Hauptkanal 16.

Nachdem die Kanäle mindestens zum großen Teil gefüllt sind, strömt der Klebstoff in den Spalt und, der von den Klebstoffflächen 20 gebildet wird. Dort ist der Strömungswiderstand größer als in dem Klebstoffkanal 14.

Das Befüllen der Dentalprothese mit Klebstoff wird fortgesetzt, bis überall an dem Gingivasaum 12 Uhr Klebstoff austritt. Dies ist eine gute Möglichkeit, um über eine visuelle Kontrolle sicherzustellen, dass keine Klebstofflücke verbleibt.

Für das Aushärten des Klebstoffs verbleibt die ansonsten fertige Denallprothese mehrere Minuten, z.B. 1:30 min bis 4 Minuten, in dem Spannhalter und kann dann gebrauchsfertig entnommen werden.

In der dargestellten Ausführungsform gemäß Fig. 2 erstreckt sich in der Klebstoffkanal 14 sowohl an in der basalen als auch an in der gingivalen Seite des Zahnbogens 36. Die Seitenkanäle 18 erstrecken sich bis zum Gingivasaum 22 und damit auch an der gingivalen Seite.

Der Klebstoffkanal 14 ist - mindestens, was den Hauptkanal 16 angeht - sowohl h auf der Seite der Prothesenbasis 38 als auch auf der Seite des Zahnbogens 36 ausgebildet. In dem dargestellten Ausführungsbeispiel hat der Hauptkanal 14 einen runden Querschnitt mit einem Durchmesser D , wobei aber auch in beliebiger anderer Querschnitt möglich ist, beispielsweise ein ovaler Querschnitt.

Der Klebstoff-Hauptkanal 14 und die Seitenkanäle 18 sind bevorzugt so ausgebildet, dass sie zu ihrem Ende hin konvergieren, also einen geringeren Querschnitt aufweisen. Beispielsweise kann der Klebstoffkanal 14 über den Verlauf des Zahnbogens in seinem Durchmesser D von 1,5 mm auf 0,8 mm abnehmen. Der Klebstoff-Hauptkanal 14 hat eine Höhe H in vertikaler Richtung, wie es aus Fig. 2 ersichtlich ist.

Die Abnahme gilt sinngemäß auch für die Klebstofffläche 20, deren Spalt zum Gingivasaum 22 hin abnimmt. Am Gingivasaum ist ein Klebstoff Überschuß 23 schematisch dargestellt.

Der Klebstoffkanal kann eine Kanalachse 43 aufweisen, die in ihrer Höhenlage von der Verlängerung der Klebstofffläche 20 geschnitten wird. Möglich ist aber auch ein Versatz in okklusaler oder gingivaler Richtung.

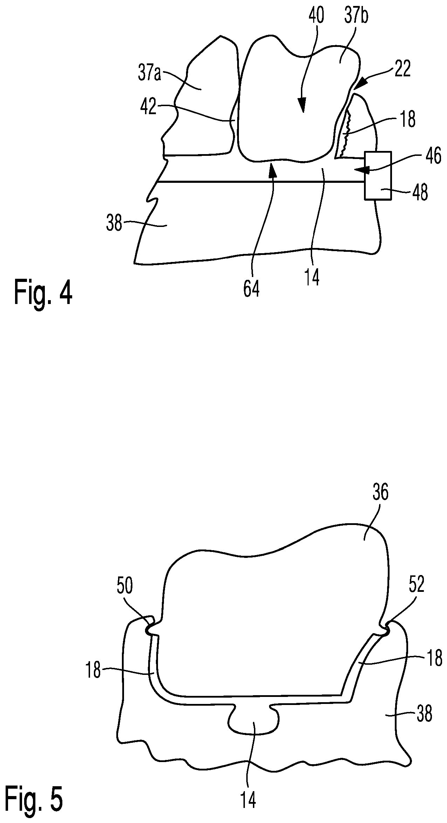

Die Erfindung ist nicht auf die Realisierung des Zahnbogens 36 aus einem Stück beschränkt. Vielmehr kann der Zahnbogen 36 auch aus Einzelzähnen bestehen, wie es aus Fig. 4 mit den Zähnen 37a und 37b ersichtlich ist, die je in die Zahnausnehmung 40 oder die Zahnausnehmungen eingeklebt werden. Der Klebstoffkanal 14 kann sich dann entlang der Basalfläche der Einzelzähne erstrecken.

Die Form der Zahnausnehmungen 40 und dementsprechend des gingivalen Bereichs des Zahnbogens 36 lässt sich in weiten Bereichen an die Erfordernisse anpassen. Hier spielen ästhetische Gesichtspunkte eine Rolle.

Erfindungsgemäß ist es möglich, demgegenüber mechanische Gesichtspunkte etwas in den Hintergrund treten zu lassen, nachdem erfindungsgemäß die Klebe-Sicherheit und die Klebekraft verbessert ist.

Aus Fig. 3 ist ersichtlich, in welcher Weise der Klebstoffkanal 14 sich zwischen dem Zahnbogen 36 und dem Prothesenbasis-Material 32 erstreckt. Wie ersichtlich ist, ist der Spritzenadapter 28 in dem Prothesenbasis-Material 32 aufgenommen. Von dem Hauptkanal 16 erstrecken sich zahlreiche Nebenkanäle 18 seitlich weg und der Klebstoffspalt 42 ist vollständig, also bis zum Gingivasaum 22 bzw. über diesen hinaus, zuverlässig mit Klebstoff gefüllt.

In einer weiteren Ausführungsform gemäß Fig. 4 ist ersichtlich, dass an dem der Befüllöffnung gegenüberliegenden Ende des Klebstoffkanals 14 eine Entlüftungsöffnung 46 ausgebildet ist. Diese ist mit einem Filterelement 48 verschlossen, wobei insofern auf die EP 1 897 513 B1 vollinhaltlich Bezug genommen wird. Das Filterelement 48 erlubt die Entlüftung des Klebstoffkanals 14, sperrt jedoch, sobald es durch Klebstoff erreicht wird.

Daduch läßt sich ausreichend Druck im Klebstoffstrom aufbauen, um auch Klebeflächen mit einem kleinen Klebstoffspalt 42 mit Klebstoff zu versoregen.

Der Zahnsatz ist hier aus Einzelzähnen aufgebaut, von denen die Einzelzähne 37a und 37b ersichtlich sind. Um den Einzelzahn herum erstreckt sich die Klebefläche mit dem Klebespalt 42 in an sich bekannter dreidimensionaler Form, wobei bevorzugt zusätzlich Seitenkanäle 18 wie vorstehend erläutert der besseren Versorgung des Klebespalts 42 bis zum Gingivasaum 22 dienen.

In einer weiteren Ausführungsform gemäß Fig. 5 sind Fixierelemente 50 und 52 vorgesehen, die Zahnsatz und Basis 38 relativ zueinander an einer festen Position fixieren. Diese können einrasten und bspw. als Klickelemente oder Schnapper an dem Zahnbogen 36 und/oder Prothesenbasis 38 vorgesehen sein, um diese beiden Elemente gegeneinander zu positionieren. Die Fixierelemente 50 und 52 erlauben je eine formschlüssige Verbindung zwischen Zahnbogen 36 und Basis 38 und rasten ein. Der Zahnbogen 36 kann insofern eine Transferschablone simuliren, an der die Prothesenbasis 38 eingerastet wird.

Wie ersichtlich ist, verläuft der Klebstoffkanal 14 bei dieser Ausführungsform in der Basis 38 und hat einen ovalen Querschnitt und eine Abrundung 44 zur Verbesserung der Einströmung in die Seitenkanäle 18.

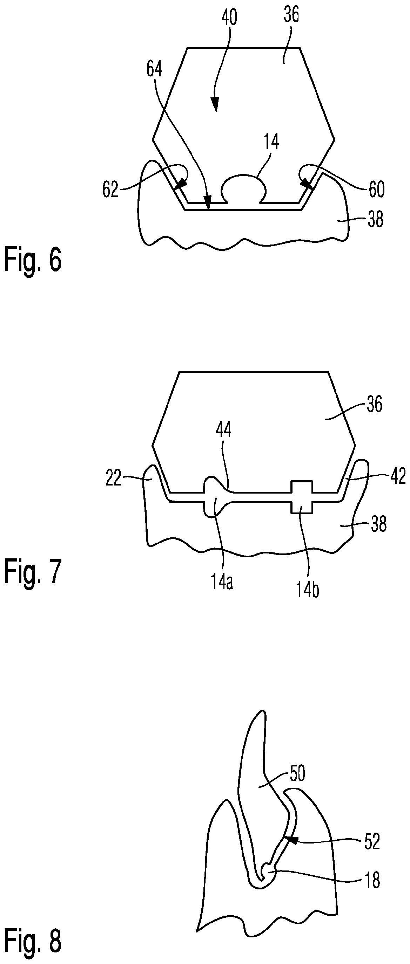

Fig. 6 und 7 zeigen verschiedene andere Ausgestaltungen der Klebstoffkanals 14. Dieser ist gemäß Fig. 6 vollständig in dem Zahnbogen 36 ausgebildet und hat einen ovalen Querschnitt. Die Zahnausnehmung 40 weist divergierende Seitenflanken 60, 62 auf, ausgehend von einer basalen Fläche 64.

Gemäß Fig. 7 sind 2 Klebstoffkanäle 14a und 14b nebeneinander ausgebildet. Kanal 14a hat einen asymmetrischen, im wesentlichen dreieckigen Querschnitt, mit einem Strömungsschwerpunkt zum benachbarten Ginivasaum 22 hin, während Kanal 14b einen rechteckigen Querschnitt aufweist.

Zwischen den Kanälen 14a und 14b ist der Klebstoffspalt 42 dünner, da er beidseitig mit Klebstoff beaufschlagt wird.

Während hier vorstehend der Klebstoffkanal 14 unter Bezug auf den Prämolarund Molar-Bereich dargestellt ist, versteht es sich, dass auch im SchneidezahnBereich 50 ein entsprechender Klebstoffkanal 14 ausgebildet sein kann.

Dies ist in Fig. 8 dargestellt. Dieser kann sich dort mangels Basalfläche an der oralen oder labialen Gingivafläche 52 des Schneidezahns 50 recht weit zum gingivalen Ende des Schneidezahns hin verlagert an diesem entlang erstrecken.

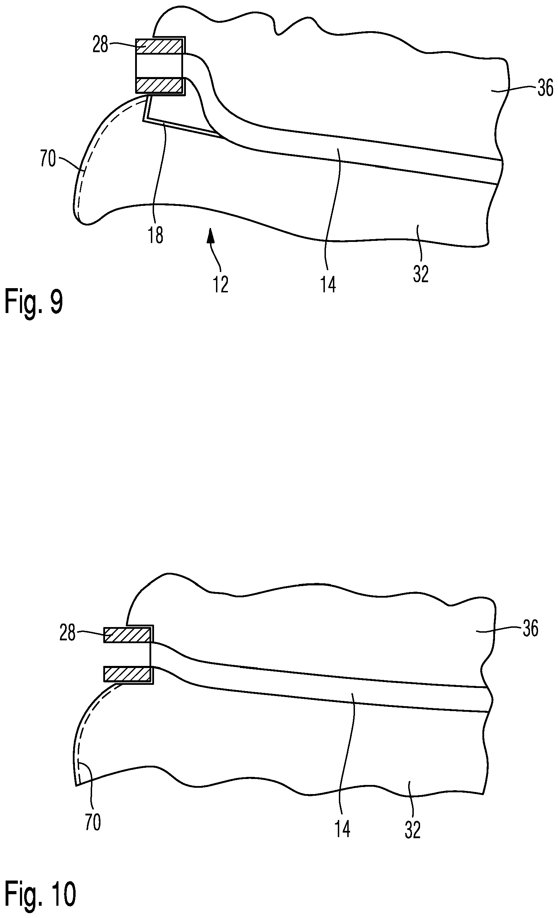

In der Ausführungsform gemäß Fig. 9 ist das Befüllelement 28 am Zahnbogen 36 angeordnet. Der Klebstoffkanal 14 verläuft von diesem ausgehend zunächst in Richtung des Überganges zwischen Zahnbogen 36 und Basis 32 und dann auf Höhe des Übergangs.

Die Prothesenbasis 32 ist bei dieser Ausführungsform mit Übermass 70 gefertigt, so dass es in einem letzten Frässchritt mit bereits eingeklebtem Zahnbogen möglich ist, die Prothesenbasis 32 exakt auf das gewünschte Mass zu bringen, und zugleich einen etwaigen Klebstoffüberschuss zu entfernen.

Zum proximalen Ende 12 hin verläuft bei dieser Ausführungsform ein Teilkanal 18 zurück, um auch die dortigen Bereiche mit Klebstoff zu versorgen.

In der Ausführungsform gemäß Fig. 10 ist das Befüllelement 28 am Übergang zwischen Zahnbogen 36 und Basis 32 angeordnet. Es ist dann auf der gleichen Höhe wie der Übergang zwischen Zahnbogen 36 und Basis 32.

Auch hier ist das Übermaß 70 angedeutet.

## Patentansprüche

1. Dentalprothese mit einer Prothesenbasis (38) und einem Zahnbogen (36), nämlich einem Voll-Zahnsatz oder einem Teil-Zahnsatz, wobei die Prothesenbasis (38) mindestens eine Zahnausnehmung (40) für die Aufnahme des Zahnbogens (36) aufweist, und wobei der Zahnbogen (36) über einen Klebstoff in die mindestens eine Zahnausnehmung (40) eingeklebt ist, wobei in der Zahnausnehmung (40) und/oder in oder an den Zahnbogen (36) ein Klebstoffkanal (14) ausgebildet ist, der sich entlang der mindestens einen Zahnausnehmung (40) oder dem Zahnbogen (36) in deren oder dessen Haupterstreckungsrichtung erstreckt, und dass sich von dem Klebstoffkanal (14) ausgehend in oraler Richtung einerseits und in vestibulärer Richtung andererseits eine dreidimensional geformte Klebstofffläche (20) zwischen dem Zahnbogen (36) und der Prothesenbasis (38) erstreckt, die je bis zum Gingivasaum (22) reicht, **dadurch gekennzeichnet, dass** sich von dem Klebstoffkanal (14) ausgehend in vestibulärer und/oder in oraler Richtung Klebstoffkanal-Seitenäste (18) erstrecken, die vor dem Gingivasaum (22) enden.

2. Dentalprothese nach Anspruch 1, **dadurch gekennzeichnet, dass** der Klebstoffkanal (36) an einer Klebstoff-Befüllöffnung (19) beginnt, deren Ausgestaltung an ein Befüllelement (24) angepasst ist.

3. Dentalprothese nach Anspruch 1 oder 2, **dadurch gekennzeichnet, dass** an der Befüllöffnung (19) des Klebstoffkanals (14) ein Spritzenadapter (28) entweder als separates Element oder in dem Prothesenbasismaterial (32) und/oder Zahnbogenmaterial eingeformt angebracht ist, über welchen Adapter (28) der Kleber in den Klebstoffkanal (14) einbringbar ist.

4. Dentalprothese nach Anspruch 1, 2 oder 3, **dadurch gekennzeichnet, dass** der Klebstoffkanal (14) sich zentral an der basalen und/oder gingivalen Seite des Zahnbogens (36) und/oder Prothesenbasis (38) erstreckt und/oder dass der Klebstoffkanal (14) einen runden Querschnitt aufweist, insbesondere einen elliptischen oder kreisrunden.

5. Dentalprothese nach einem der vorhergehenden Ansprüche, **dadurch gekennzeichnet, dass** der Klebstoffkanal (14) in okklusal/gingivaler Richtung eine geringere Ausdehnung als in oral/vestibulärer Richtung aufweist, insbesondere in einem Höhen-/Breitenverhältnis zwischen 1 : 1,1 und 1 : 5 und insbesondere in einem Höhen/Breitenverhältnis von 1 : 1,5.

6. Dentalprothese nach einem der vorhergehenden Ansprüche, **dadurch gekennzeichnet, dass** die Klebstoffkanal-Seitenäste (18) seitlich also in mesialer/distaler Richtung, je offen sind und dort in die Klebstofffläche (20) übergehen.

7. Dentalprothese nach einem der vorhergehenden Ansprüche, **dadurch gekennzeichnet, dass** der Klebstoffkanal (14) eine Höhe H in gingivaler/okklusaler Richtung zwischen 0,3 mm und 5 mm, insbesondere zwischen 0,5 mm und 1,5 mm aufweist und/oder der Strömungsquerschnitt des Klebstoffkanals (14) von der Befüllöffnung (19) ausgehend mindestens streckenweise abnimmt.

8. Dentalprothese nach einem der vorhergehenden Ansprüche, **dadurch gekennzeichnet, dass** sich eine seitlich des Klebstoffkanals (14) erstreckende Klebstofffläche (20) erstreckt, die vollständig mit Klebstoff benetzt ist, in einer Stärke zwischen 50 und 1000 µm und insbesondere zwischen 150 und 350 µm.

9. Dentalprothese nach einem der vorhergehenden Ansprüche, dadurch gekennzeinet, dass der Klebstoffkanal (14) mit einem strömungstechnisch günstig geformten Übergang in die Klebstofffläche übergeht, insbesondere mit einer Abrundung (44)

10. Dentalprothese nach einem der vorhergehenden Ansprüche, **dadurch gekennzeichnet, dass** der Zahnbogen (36) aus einem einstückigen zahnfarbenen Rohling oder Halbfertigprodukt gefertigt, insbesondere subtraktiv bzw. additiv hergestellt ist, und der sich in die mindestens eine Zahnausnehmung (40) der Prothesenbasis (38) erstreckende Aufnahmeabschnitt des Zahnbogens (36) einen Querschnitt mit diesen divergierenden Seitenflanken (60, 62) aufweist.

11. Dentalprothese nach Anspruch 10, **dadurch gekennzeichnet, dass** der Zahnbogen über seinen Verlauf einen im Wesentlichen gleichbleibenden Querschnitt des Aufnahmeabschnitts für die Aufnahme in die Zahnausnehmung (40) aufweist, der sich gegebenenfalls zum Schneidezahnbereich (50) hin etwas verjüngt, und dass der Klebstoffkanal (14) mindestens teilweise in der basalen Fläche (64) des Aufnahmeabschnitts des Zahnbogens (36) in der Zahnausnehmung (40) ausgebildet ist.

12. Dentalprothese nach einem der Ansprüche 1 bis 9, **dadurch gekennzeichnet, dass** der Zahnbogen (36) aus Einzelzähnen (37a, 37b) besteht, die in die Zahnausnehmung (40) oder in die Zahnausnehmungen je eingeklebt sind, wobei sich der Klebstoffkanal (14) zentral an der Basalfläche (64) der Einzelzähnevorgesehen ist..

13. Dentalprothese nach einem der vorhergehenden Ansprüche, **dadurch gekennzeichnet, dass** an dem Ende des Klebstoffkanals, dem Adapter (28) gegenüberliegend, eine Entlüftungsöffnung (46) ausgebildet ist, die insbesondere mit einem Filterelement (48) abgeschlossen ist.

14. Halbprodukt als Vorprodukt für eine Dentalprothese mit einer Prothesenbasis (38), die aus einem Basisrohling, insbesondere durch Fräsen, hergestellt ist, wobei die Prothesenbasis (38) mindestens eine Zahnausnehmung (40) für die Aufnahme eines Zahnbogens aufweist, wobei die Prothesenbasis (38) an Stellen außerhalb der Zahnausnehmung (40) mit einem Übermaß (70) gefertigt ist, wobei mindestens teilweise in der Zahnausnehmung (40) ein Klebstoffkanal (14) ausgebildet ist, der sich entlang der mindestens einen Zahnausnehmung (40) in deren Haupterstreckungsrichtung erstreckt und dass sich von dem Klebstoffkanal (14) ausgehend in oraler Richtung einerseits und in vestibulärer Richtung andererseits eine dreidimensional geformte Klebstofffläche (20) zwischen der Prothesenbasis (38) und dem aufzunehmenden Zahnbogen (36) erstreckt, die je bis zum Gingivasaum (22) reicht, **dadurch gekennzeichnet, dass** sich von dem Klebstoffkanal (14) ausgehend in vestibulärer und/oder in oraler Richtung Klebstoffkanal-Seitenäste (18) erstrecken, die vor dem Gingivasaum (22) enden.

15. Bausatz zur Herstellung einer Dentalprothese, mit einem zahnfarbenen Zahnbogen (36), nämlich einem Voll-Zahnsatz oder einem Teil-Zahnsatz, und einer fleischfarbenen Prothesenbasis (38), wobei die Prothesenbasis (38) mindestens eine Zahnausnehmung (40) für die Aufnahme des Zahnbogens (36) aufweist, und wobei der Zahnbogen (36) über einen Klebstoff in die mindestens eine Zahnausnehmung (40) eingeklebt wird, wobei in der Zahnausnehmung (40) und/oder in oder an den Zahnbogen (36) ein Klebstoffkanal (14) ausgebildet ist, der sich entlang der mindestens einen Zahnausnehmung (40) oder dem Zahnbogen (36) in deren oder dessen Haupterstreckungsrichtung erstreckt, und dass sich von dem Klebstoffkanal (14) ausgehend in oraler Richtung einerseits und in vestibulärer Richtung andererseits eine dreidimensional geformte Klebstofffläche (20) zwischen dem Zahnbogen (36) und der Prothesenbasis (38) und dem aufzunehmenden Zahnbogen (36) erstreckt, die je bis zum Gingivasaum (22) reicht , **dadurch gekennzeichnet, dass** sich von dem Klebstoffkanal (14) ausgehend in vestibulärer und/oder in oraler Richtung Klebstoffkanal-Seitenäste (18) erstrecken, die vor dem Gingivasaum (22) enden, und dass der Bausatz ferner ein Befüllelement (28) und Klebstoff aufweist, sowie ggf. ein Filterelement (48), das für die Anbringung an dem dem Befüllelement (28) gegenüberliegenden Ende des Klebstoffkanals (14) bestimmt ist.

## Claims

1. A dental prosthesis comprising a prosthesis base (38) and a dental arch (36), which is a full set of teeth or a partial set of teeth, wherein
the prosthesis base (38) comprises at least one tooth recess (40) for receiving the dental arch (36), and wherein the dental arch (36) is bonded into the at least one tooth recess (40) via an adhesive, wherein an adhesive channel (14) is formed in the tooth recess (40) and/or in or at the dental arch (36) which extends along the at least one tooth recess (40) or the dental arch (36) in the main direction of extension thereof, and in that a three-dimensionally shaped adhesive surface (20) extends, starting from the adhesive channel (14), between the dental arch (36) and the prosthesis base (38) in the oral direction on the one hand and in the vestibular direction on the other hand, which adhesive surface (20) in each case extends as far as to the gingival margin (22)
**characterized in that**
adhesive channel side branches (18) extend from the adhesive channel (14) in the vestibular and/or oral direction, terminating in front of the gingival margin (22).

2. The dental prosthesis according to claim 1, **characterized in that** the adhesive channel (36) begins at an adhesive filling opening (19), the design of which is adapted to a filling element (24).

3. The dental prosthesis according to claim 1 or 2, **characterized in that** a syringe adapter (28) is attached to the filling opening (19) of the adhesive channel (14) either as a separate element or molded into the prosthesis base material (32) and/or dental arch material, through which adapter (28) the adhesive is introducible into the adhesive channel (14).

4. The dental prosthesis according to claims 1, 2 or 3, **characterized in that** the adhesive channel (14) centrally extends on the basal and/or gingival side of the dental arch (36) and/or prosthesis base (38) and/or that the adhesive channel (14) has a round cross-section, especially an elliptical or circular cross-section.

5. The dental prosthesis according to one of the preceding claims, **characterized in that** the adhesive channel (14) has inferior extension in the occlusal/gingival direction than in the oral/vestibular direction, especially in a height/width ratio between 1: 1.1 and 1: 5 and especially in a height/width ratio of 1:1.5.

6. The dental prosthesis according to one of the preceding claims, **characterized in that** the resepctive adhesive channel side branches (18) are laterally open, i.e. in the mesial/distal direction, therefrom merging into the adhesive surface (20).

7. The dental prosthesis according to one of the preceding claims, **characterized in that** the adhesive channel (14) has a height H in the gingival/occlusal direction of between 0.3 mm and 5 mm, especially between 0.5 mm and 1.5 mm, and/or the flow cross section of the adhesive channel (14) decreases at least in sections starting from the filling opening (19).

8. The dental prosthesis according to one of the preceding claims, **characterized in that** an adhesive surface (20) extends laterally of the adhesive channel (14) and is completely wetted with adhesive, in a thickness between 50 and 1000 µm and especially between 150 and 350 µm.

9. The dental prosthesis according to one of the preceding claims, **characterized in that** the adhesive channel (14) merges into the adhesive surface in a fluidically favorably shaped transition, especially in a rounding (44).

10. The dental prosthesis according to one of the preceding claims, **characterized in that** the dental arch (36) is manufactured from a one-piece tooth-colored blank or semi-finished product, and especially is manufactured subtractively or additively, and the receiving portion of the dental arch (36) extending into the at least one tooth recess (40) of the prosthesis base (38) has a cross-section with side flanks (60, 62) diverging therefrom.

11. The dental prosthesis according to claim 10, **characterized in that** the dental arch, across its course, has a substantially constant cross-section of the receiving section for being received in the tooth recess (40), which, if necessary, slightly tapers towards the incisor region (50), and **in that** the adhesive channel (14) is formed at least partially in the basal surface (64) of the receiving section of the dental arch (36) in the tooth recess (40).

12. The dental prosthesis according to one of the claims 1 to 9, **characterized in that** the dental arch (36) consists of individual teeth (37a, 37b) which each are glued into the tooth recess (40) or into the respective tooth recesses, wherein the adhesive channel (14) is centrally located at the basal surface (64) of the individual teeth.

13. The dental prosthesis according to one of the preceding claims, **characterized in that** at the end of the adhesive channel, opposite to the adapter (28), a vent opening (46) is formed, which is terminated especially by a filter element (48).

14. A semi-finished product as a preliminary product for a dental prosthesis comprising a prosthesis base (38), which is produced from a base blank, especially by milling, wherein the prosthesis base (38) comprises at least one tooth recess (40) for receiving a dental arch, wherein the prosthesis base (38) is manufactured with an oversize (70) at locations outside the tooth recess (40), wherein in the tooth recess (40) an adhesive channel (14) is formed at least partially which extends along the at least one tooth recess (40) in the main extension direction thereof, and
in that a three-dimensionally shaped adhesive surface (20) extends from the adhesive channel (14) in the oral direction on the one hand and in the vestibular direction on the other hand between the prosthesis base (38) and the dental arch (36) to be accommodated, each of which extending as far as to the gingival margin (22),
**characterized in that** adhesive channel side branches (18) extend from the adhesive channel (14) in vestibular and/or in oral direction, which terminate in front of the gingival margin (22).

15. A kit for producing a dental prosthesis, comprising a tooth-colored dental arch (36), which dental arch is a full tooth set or a partial tooth set, and a flesh-colored prosthesis base (38), the prosthesis base (38) having at least one tooth recess (40) for receiving the dental arch (36), and the dental arch (36) being bonded into the at least one tooth recess (40) by an adhesive,
wherein an adhesive channel (14) is formed in the tooth recess (40) and/or in or on the tooth arch (36), which adhesive channel extends along the at least one tooth recess (40) or the tooth arch (36) in the main direction of extension thereof, and
in that a three-dimensionally shaped adhesive surface (20) extends from the adhesive channel (14) in the oral direction on the one hand and in the vestibular direction on the other hand between the dental arch (36) and the prosthesis base (38) and the dental arch (36) to be accommodated, each of which extends as far as to the gingival margin (22),
**characterized in that** adhesive canal side branches (18) extend from the adhesive canal (14) in vestibular and/or in oral direction and terminate in front of the gingival margin (22), and **in that** the kit further comprises a filling element (28) and an adhesive, as well as optionally a filter element (48) intended for attachment to the end of the adhesive canal (14) opposite to the filling element (28).

## Revendications

1. Prothèse dentaire avec une base de prothèse (38) et une arcade dentaire (36), c'est-à-dire un jeu de dents complet ou un jeu de dents partiel, où la base de prothèse (38) présente au moins un évidement dentaire (40) pour recevoir l'arcade dentaire (36), et où l'arcade dentaire (36) est collée dans ledit au moins un évidement dentaire (40) au moyen d'un adhésif, où dans le creux de la dent (40) et/ou dans ou sur l'arcade dentaire (36) un canal d'adhésif (14) est formé qui s'étend le long dudit au moins un évidement dentaire (40) ou de l'arcade dentaire (36) dans le sens de son extension principale et à partir du canal d'adhésif (14) une surface adhésive (20) de forme tridimensionnelle s'étend dans le sens oral d'une part et dans le sens vestibulaire d'autre part entre l'arcade dentaire (36) et la base de la prothèse (38), qui s'étend jusqu'au bord gingival (22), **caractérisé en ce que** des branches latérales (18) du canal d'adhésif s'étendent à partir du canal d'adhésif (14) dans le sens vestibulaire et/ou dans le sens oral et se terminent devant le bord gingival (22).

2. Prothèse dentaire selon la revendication 1, **caractérisée en ce que** le canal d'adhésif (36) commence à une ouverture de remplissage (19) d'adhésif, dont la conception est adaptée à un élément de remplissage (24).

3. Prothèse dentaire selon la revendication 1 ou 2, **caractérisée en ce qu'**un adaptateur de seringue (28) est fixé à l'ouverture de remplissage (19) du canal d'adhésif (14), soit comme élément séparé, soit moulé dans le matériau de base de la prothèse (32) et/ou le matériau de l'arcade dentaire, et **en ce que** par le biais de cet adaptateur (28) l'adhésif peut être introduit dans le canal d'adhésif (14).

4. Prothèse dentaire selon la revendication 1, 2 ou 3, **caractérisée en ce que** le canal d'adhésif (14) s'étend de manière centrale sur le côté basal et/ou gingival de l'arcade dentaire (36) et/ou de la base de la prothèse (38) et/ou **en ce que** le canal d'adhésif (14) présente une section transversale ronde, en particulier une section transversale elliptique ou circulaire.

5. Prothèse dentaire selon l'une des revendications précédentes, **caractérisée en ce que** le canal d'adhésif (14) présente une extension plus faible dans le sens occlusal/gingival que dans le sens oral/vestibulaire, en particulier dans un rapport hauteur/largeur compris entre 1 : 1,1 et 1 : 5 et en particulier dans un rapport hauteur/largeur de 1 : 1,5.

6. Prothèse dentaire selon l'une des revendications précédentes, **caractérisée en ce que** les branches latérales du canal d'adhésif (18) sont chacune ouvertes latéralement, c'est-à-dire dans le sens mésial/distal, et se fondent dans la surface adhésive (20) à cet endroit.

7. Prothèse dentaire selon l'une des revendications précédentes, **caractérisée en ce que** le canal d'adhésif (14) présente une hauteur H dans le sens gingival/occlusal comprise entre 0,3 mm et 5 mm, en particulier entre 0,5 mm et 1,5 mm, et/ou la section d'écoulement du canal d'adhésif (14) diminue au moins par sections à partir de l'ouverture de remplissage (19).

8. Prothèse dentaire selon l'une des revendications précédentes, **caractérisée en ce qu'**une surface adhésive (20) s'étend latéralement au canal d'adhésif (14) et est complètement recouvert d'adhésif, en une épaisseur comprise entre 50 et 1000 µm et en particulier entre 150 et 350 µm.

9. Prothèse dentaire selon l'une des revendications précédentes, **caractérisée en ce que** le canal d'adhésif (14) se fond dans la surface adhésive avec une transition de forme fluidiquement favorable, en particulier avec un arrondi (44).

10. Prothèse dentaire selon l'une des revendications précédentes, **caractérisée en ce que** l'arcade dentaire (36) est fabriquée à partir d'un lingotin ou d'un produit semi-fini d'une seule pièce de la couleur d'une dent, en particulier est fabriquée par soustraction ou par addition, et la partie de réception de l'arcade dentaire (36) s'étendant dans ledit au moins un évidement (40) de la base (38) de la prothèse présente une section transversale avec des flancs latéraux (60, 62) qui en divergent.

11. Prothèse dentaire selon la revendication 10, **caractérisée en ce que** l'arcade dentaire présente, sur son parcours, une section transversale sensiblement constante de la partie de réception destinée à être reçue dans l'évidement dentaire (40), qui se rétrécit éventuellement quelque peu en direction de la zone des incisives (50), et **en ce que** le canal d'adhésif (14) est formé au moins partiellement dans la surface basale (64) de la partie de réception de l'arcade dentaire (36) dans l'évidement dentaire (40).

12. Prothèse dentaire selon l'une des revendications 1 à 9, **caractérisée en ce que** l'arcade dentaire (36) est constituée de dents individuelles (37a, 37b) collées dans l'évidement dentaire (40) ou dans les évidements dentaires respectifs, où le canal d'adhésif (14) est prévu au centre de la surface basale (64) des dents individuelles.

13. Prothèse dentaire selon l'une des revendications précédentes, **caractérisée en ce qu'**une ouverture de ventilation (46) est formée à l'extrémité du canal d'adhésif opposée à l'adaptateur (28), laquelle ouverture de ventilation étant fermée en particulier par un élément filtrant (48).

14. Semi-produit en tant qu'ébauche pour une prothèse dentaire avec une base de prothèse (38) qui est fabriquée à partir d'un lingotin de base, en particulier par fraisage, où la base de prothèse (38) présente au moins un évidement dentaire (40) pour recevoir une arcade dentaire, où la base de prothèse (38) est fabriquée avec un surplus (70) à des endroits situés à l'extérieur de l'évidement dentaire (40), où un canal d'adhésif (14) est formé au moins partiellement dans l'évidement dentaire (40), qui s'étend le long d'au moins une cavité dentaire (40) dans le sens principal de son extension, et en ce qu'une surface adhésive (20) de forme tridimensionnelle s'étend à partir du canal adhésif (14) dans le sens oral d'une part et dans les sens vestibulaire d'autre part entre la base de la prothèse (38) et l'arcade dentaire (36) à recevoir qui s'étend dans un cas comme dans l'autre jusqu'au bord gingival (22), **caractérisé en ce que** des branches latérales (18) du canal d'adhésif s'étendent à partir du canal d'adhésif (14) dans le sens vestibulaire et/ou dans le sens oral et se terminent devant le bord gingival (22).

15. Kit pour la fabrication d'une prothèse dentaire, comprenant une arcade dentaire (36) de la couleur d'une dent, c'est-à-dire un jeu de dents complet ou un jeu de dents partiel, et une base de prothèse (38) de couleur chair, où la base de prothèse (38) présente au moins un évidement (40) pour recevoir l'arcade dentaire (36), et où l'arcade dentaire (36) est collée dans ledit au moins un évidement dentaire (40) par l'intermédiaire d'un adhésif, où un canal d'adhésif (14) qui s'étend le long dudit au moins un évidement dentaire (40) ou de l'arcade dentaire (36) dans le sens de son extension principale est formé dans l'évidement dentaire (40) et/ou dans ou sur l'arcade dentaire (36), et en ce qu'une surface adhésive (20) de forme tridimensionnelle s'étend à partir du canal adhésif (14) dans le sens oral d'une part et dans les sens vestibulaire d'autre part entre la base de la prothèse (38) et l'arcade dentaire (36) à recevoir qui s'étend dans un cas comme dans l'autre jusqu'au bord gingival (22), **caractérisé en ce que** des branches latérales (18) du canal d'adhésif s'étendent à partir du canal d'adhésif (14) dans le sens vestibulaire et/ou dans le sens oral et se terminent devant le bord gingival (22) et **en ce que** le kit comprend en outre un élément de remplissage (28) et un adhésif, ainsi qu'éventuellement un élément filtrant (48) prévu pour être fixé à l'extrémité du canal adhésif (14) opposée à l'élément de remplissage (28).
